# EUROPÄISCHE PATENTSCHRIFT

(11) **EP 0 598 728 B1**
(45) Veröffentlichungstag und Bekanntmachung des Hinweises auf die Patenterteilung: **18.09.1996**
(21) Anmeldenummer: 92909193.2
(22) Anmeldetag: 07.05.1992
(51) Int. Cl.: G01N 29/00, G01N 29/28

(54) **ULTRASCHALLPRÜFKOPF, GEEIGNET FÜR SCHALLANKOPPLUNG ÜBER EINE WASSERVORLAUFSTRECKE**
ULTRASONIC PROBE SUITABLE FOR ACOUSTIC COUPLING VIA A WATER CHANNEL
PALPEUR A ULTRASONS CONVENANT POUR UN COUPLAGE ACOUSTIQUE PAR UNE CONDUITE D'ARRIVEE D'EAU

(30) Priorität: 16.08.1991 DE 9110135 U
(43) Veröffentlichungstag der Anmeldung: 01.06.1994
(73) Patentinhaber: KRAUTKRÄMER GmbH & Co., D-50354 Hürth (DE)
(72) Erfinder: GÜNTHER, Werner, D-5024 Pulheim (DE); SAUER, Ulrich, D-5042 Erftstadt (DE)
(74) Vertreter: Bauer, Wulf, Dr.
(86) Internationale Anmeldenummer: DE9200374
(87) Internationale Veröffentlichungsnummer: WO9304362

(56) Entgegenhaltungen:
- EP-A- 0 119 096
- FR-A- 2 312 032
- US-A- 5 001 932

## Beschreibung

Die Erfindung bezieht sich auf einen Ultraschallprüfkopf, geeignet für Schallankopplung über eine Wasservorlaufstrecke und bestehend aus einem Hauptteil, das ein Gehäuse aufweist, in dem ein Ultraschallschwinger untergebracht ist, wobei der Ultraschallschwinger mit einer Schutzschicht verbunden ist, die bündig mit einer Unterfläche des Gehäuses abschließt.

Zu Ultraschallprüfköpfen der eingangs genannten Art wird allgemein verwiesen auf das DE-Buch J. und H. Krautkrämer "Werkstoffprüfung mit Ultraschall", 4. Aufl., Springerverlag. Ein Ultraschallprüfkopf ist weiter aus US-A-5 001 932 bekannt.

Ultraschallprüfköpfe sind einsatzbereite Proben für die Ultraschallprüfung von Werkstücken. Um eine Prüfung durchzuführen, werden sie mit einem geeigneten Prüfgerät verbunden. Nach dem Stand der Technik setzt man unterschiedliche Prüfköpfe je nach akustischer Ankopplung des Prüfkopfes an ein Werkstück ein, beispielsweise für eine Ankopplung in Tauchtechnik, in Pfützentechnik, mit Wasserstrahl oder andere Ankopplungen, beispielsweise schleifende Ankopplung, Ankopplung über eine pastöse Masse usw. Beim praktischen Einsatz eines Ultraschallprüfkopfes ist es jedoch nachteilig, daß die Ultraschallprüfköpfe nach dem Stand der Technik nicht für alle Ankopplungsarten geeignet sind. Dies hat zur Folge, daß je nach Ankopplungsart ein anderer Prüfkopf eingesetzt werden muß. Der Anwender wünscht jedoch, mit einem Ultraschallprüfkopf alle Ankopplungsarten durchführen zu können. Insbesondere ist es für eine praktische Anwendung günstig, wenn ein Ultraschallprüfkopf ohne Austausch von einem Ultraschallprüfkopf für Ankopplung über einen Wasserspalt umgebaut werden kann in einen Ultraschallprüfkopf für Wasserstrahlankopplung.

Hier setzt die Erfindung ein. Sie hat es sich zur Aufgabe gemacht, einen Ultraschallprüfkopf anzugeben, der universell einsetzbar ist für unterschiedliche Arten der akustischen Ankopplung an ein Werkstück.

Ausgehend von dem Ultraschallprüfkopf der eingangs genannten Art wird diese Aufgabe gelöst durch einen Ultraschallprüfkopf mit den Merkmalen des Schutzanspruchs 1.

Dieser Ultraschallprüfkopf kann eingesetzt werden ohne Fließwasserzufuhr durch seinen Wasserkanal, beispielsweise bei Prüfaufgaben in Tauchtechnik oder durch Ankopplung über eine pastöse Masse, er kann aber auch eingesetzt werden für Ankopplung mit Wasserspalt, wobei Fließwasser durch seinen Wasserkanal zugeführt wird. Wird an die formschlüssige Kuppeleinrichtung das Düsenteil angesetzt, so ist der Ultraschallprüfkopf unmittelbar für Ankopplung über einen Wasserstrahl geeignet. Insgesamt kann mit einem Ultraschallprüfkopf somit der mögliche Bereich der akustischen Ankopplungen abgedeckt werden. Für die Praxis erweist sich dies als kosten- und zeitsparend, zudem wird insbesondere für den weniger geübten Anwender die Sicherheit erhöht, ein verläßliches Meßergebnis zu erhalten, weil er sich nicht auf unterschiedliche akustische Verhalten unterschiedlicher Prüfköpfe einstellen und sein Ultraschallprüfgerät entsprechend nicht umstellen muß.

Da die Schutzschicht, mit der der Ultraschallschwinger nach unten abgeschlossen ist, bündig in die Unterfläche des Gehäuses des Hauptteils übergeht, kann der erfindungsgemäße Ultraschallprüfkopf schleifend auf ein Werkstück aufgelegt werden. Ebenso ist er geeignet für Ultraschallankopplung durch einen extern aufgebrachten Wasserfilm oder über eine Paste. Der Wasserkanal wird immer dann benutzt, wenn über den Ultraschallprüfkopf nach der Erfindung Wasser in den Ankopplungsbereich eingebracht werden soll. Ohne Düsenteil kann über den Prüfkopf beispielsweise Wasser für eine Wasserspaltankopplung oder zur Aufrechterhaltung einer Pfütze bei Ankopplung in Pfützentechnik zugeführt werden. Bei angesetztem Düsenteil wird eine praxisgerechte Wasserstrahlankopplung ermöglicht. Durch die Sackbohrung werden Turbulenzen verhindert und Luftblasen auch in ungünstigen Arbeitslagen vermieden. Die Sackbohrung dient als Prallbohrung. Der Querschnitt des Querkanals wird so groß gewählt, daß bei dem gegebenen Wasserstrom durch den Wasserkanal eine vollständige Ausfüllung des Düsenkanals und Ausbildung eines Wasserstrahls erreicht wird.

Da das Düsenteil aus einem Material hergestellt ist, dessen akustische Impedanz möglichst nahe der akustischen Impedanz von Wasser ist, werden die von den seitlichen Begrenzungen stammenden Störechos gering gehalten. Der Kegelstumpfverlauf des Düsenteils wird der Schallbündelform des Ultraschallschwingers angepaßt. Hier kann beispielsweise die 20 dB-Schallbündelgrenze oder eine andere übliche Schallbündelgrenze, (z. B. 3 oder 6 dB) als Begrenzung verwendet werden. Dadurch wird die zur Ankopplung pro Zeiteinheit erforderliche Flüssigkeitsmenge gering gehalten.

Als Material für das Düsenteil haben sich insbesondere Acrylglas, Epoxidharze und Polyethylen bewährt. Die Länge des kegelstumpfförmigen Düsenkanals wird nach dem Stand der Technik bestimmt, beispielsweise der Nahfeldlänge, also dem Abstand zwischen Wandler und dem Bereich maximaler Fokussierung, angepaßt.

In bevorzugter Weiterbildung ist das Gehäuse im wesentlichen zylindrisch. Hierbei ist es wiederum vorteilhaft, wenn der Wasserkanal parallel zur Zylinderachse verläuft. Die Herstellung des Gehäuses wird insgesamt dadurch vereinfacht.

Besonders bevorzugt werden Ultraschallschwinger in Form einer Kreisscheibe. Hierdurch vereinfacht sich die Form des Gehäuses und insbesondere wird der Ultraschallschwinger optimal an den kegelstumpfförmigen Düsenkanal angepaßt.

Weitere Vorteile und Merkmale der Erfindung ergeben sich aus den übrigen Ansprüchen sowie der nun folgenden Beschreibung von nicht einschränkend zu verstehenden Ausführungsbeispielen, die unter Bezugnahme auf die Zeichnung näher erläutert werden. In dieser zeigen:
- Fig. 1: eine Seitenansicht eines Ultraschallprüfkopfes mit Hauptteil und Düsenteil,
- Fig. 2: einen Axialschnitt durch einen Ultraschallprüfkopf ähnlich Figur 1,
- Fig. 3: eine Seitenansicht ähnlich Figur 1 eines weiteren Ausführungsbeispieles eines Ultraschallprüfkopfes und
- Fig. 4: eine Draufsicht auf das Düsenteil des Ausführungsbeispiels nach Fig. 3.

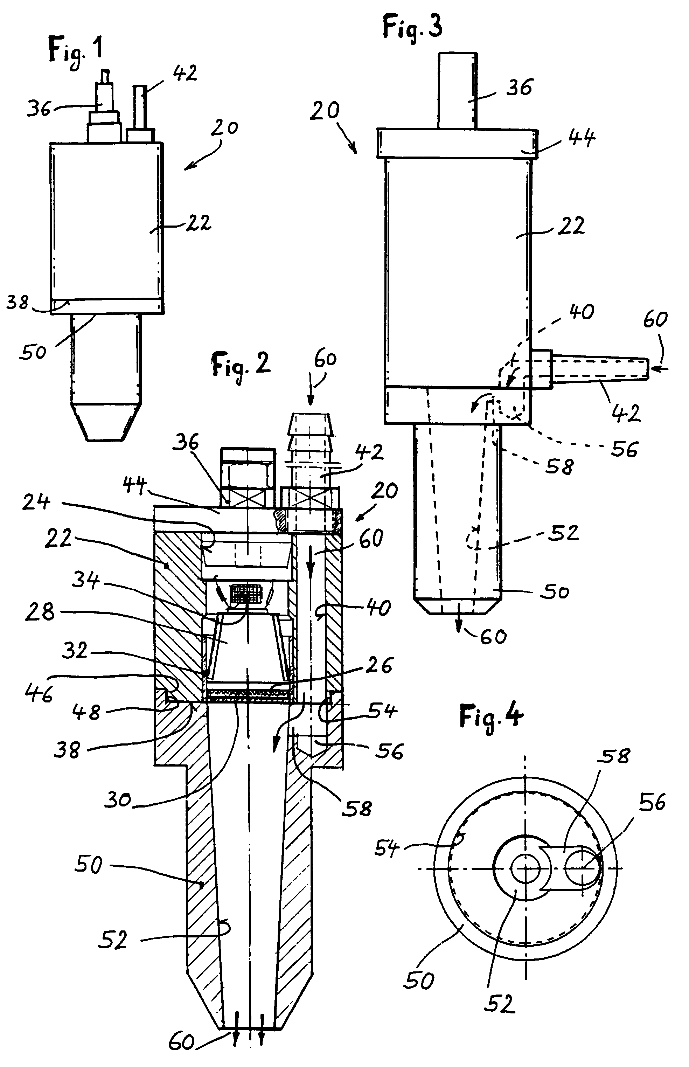

Der erfindungsgemäße Ultraschallprüfkopf besteht aus einem Hauptteil 20, das ein in den Ausführungsbeispielen nach Fig. 1 und 2 zylindrisches Gehäuse 22 aufweist. Das Gehäuse 22 hat eine zentrische, leicht gestuft ausgebildete Aufnahmebohrung 24 für einen Ultraschallschwinger 26 in Kreisscheibenform. Auf seiner Rückseite ist ein Dämpfungskörper 28 in Kegelstumpfform aufgekittet, auf seiner nach unten weisenden Frontseite befindet sich eine Schutzschicht 30 aus Metall (oder, in einer anderen Ausbildung, aus Kunststoff). Die Einheit aus Ultraschallschwinger 26, Dämpfungskörper 28 und Schutzschicht 30 befindet sich innerhalb eines Zentrierringes 32, der in die Aufnahmebohrung 24 eingesetzt ist. In bekannter Weise ist der Ultraschallschwinger 26 elektrisch angeschlossen, die elektrischen Zuleitungen sind oberhalb des Dämpfungskörpers an einen Lötstützpunkt angeschlossen und dort sichtbar eingezeichnet. Zwischen ihnen befindet sich ein elektrisches Anpaßglied 34. Die elektrischen Anschlüsse sind an einen Steckverbinder 36, der wasserdicht ausgeführt ist, angeschlossen. Die aus Stahl gefertigte Schutzschicht 30 schließt unten bündig mit einer Unterfläche 38 des Gehäuses 22 ab. Auch an dieser Stelle ist ein wasserdichter Abschluß ausgebildet.

Parallel zur Zentralachse des zylindrischen Gehäuses 22 befindet sich im Gehäuse 22 ein Wasserkanal 40. Er ist eingangsseitig, in den Figuren also jeweils oben, mit einem Schlauchanschluß 42 versehen und mündet ausgangsseitig in der Unterfläche 38 und unmittelbar neben der Schutzschicht 30.

Das Gehäuse 22 ist oben durch einen Deckel 44 verschlossen. Deckel 44 und Gehäuse 22 haben zusammen eine Länge von 46 mm, ihr Durchmesser beträgt 45 mm.

Am unteren Ende der zylindrischen Wand des Gehäuses 22 und unmittelbar angrenzend an die Unterfläche 38 ist eine Stufe 46 ausgebildet, dort ist ein Gewinde 48 vorgesehen, es bildet eine formschlüssige Kuppeleinrichtung für das im folgenden zu beschreibende Düsenteil 50.

Das Düsenteil 50 ist aus Acrylglas hergestellt, es bildet in seinem Inneren einen zentrischen, kegelstumpfförmigen Düsenkanal 52 aus. Er hat in seinem oberen Eintrittsbereich einen Durchmesser, der exakt dem Durchmesser des Ultraschallschwingers 26, nämlich 20 mm, entspricht und verjüngt sich bei einer Gesamtlänge von 80 mm nach unten hin auf einen lichten Durchmesser von 12 mm.

Das Düsenteil 50, das im wesentlichen ein Drehteil ist, hat in seinem oberen Endbereich einen der Stufe 46 angepaßten Vorsprung mit einem Innengewinde, das hier eine Gegenkuppeleinrichtung zur Kuppeleinrichtung 48 bildet. In gezeigter Weise sind Düsenteil 50 und Hauptteil 20 über die Teile 48, 54 so verbunden, daß die Oberseite des Düsenteils 50 unmittelbar an der Unterfläche 38 anliegt. Die Verbindung ist wasserdicht.

Die Aupenform des Düsenteils 50 ist ansich beliebig, im gezeigten Ausführungsbeispiel ist der Mantel zylindrisch, gestuft und unten kegelstumpfförmig.

In unmittelbarer Verlängerung des Wasserkanals 40 ist im Düsenteil 50 eine Sackbohrung 56 ausgebildet. Sie ist über einen Querkanal 58 mit dem Düsenkanal 52 verbunden. Letzterer ist von der Oberseite des Düsenteils 50 in dieses eingearbeitet und hat eine geringere Tiefe als die Sackbohrung 56, so daß ein Teil der Sackbohrung, im Ausführungsbeispiel etwa 5 mm, als Prallbohrung verbleibt. Sie kann spitz oder flach auslaufen, sie vermeidet Turbulenzen und Luftblasen auch in ungünstigen Arbeitslagen. Der Querschnitt des Querkanals 58 wird so groß gewählt, daß der Düsenkanal 52 bei vorgegebene Wasserfluß vollständig ausgefüllt ist und sich an seinem Austrittsende ein freier, klar begrenzter Wasserstrahl bildet.

Der Fluß des Wassers durch den gesamten Ultraschallprüfkopf ist durch Pfeile 60 symbolisiert.

Das dritte Ausführungsbeispiel nach den Figuren 3 und 4 entspricht im wesentlichen den bislang besprochenen Ausführungsbeispielen, es besteht jedoch der grundsätzliche Unterschied, daß der Wasserkanal 40 L-förmig verläuft und so kurz wie möglich ausgebildet ist, der Schlauchanschluß 42 steht radial vom Gehäuse 22 weg und befindet sich in unmittelbarer Nähe der Unterfläche 38. Der sich nach unten verjüngende Düsenkanal 52 ist aus Fig. 4 ersichtlich, ebenfalls das Innengewinde 54. Der Querkanal 58, der die Sackbohrung 56 mit dem Düsenkanal 52 verbindet, hat eine axiale Länge von 7,5 mm und eine Breite von 10,5 mm. Die Sackbohrung 56 und damit auch der Wasserkanal 40 haben einen Durchmesser von 7 mm. Der Eintrittsdurchmesser des Düsenkanals 52 ist ebenfalls wieder 20 mm, er verjüngt sich nach unten auf 12,2 mm.

Die Kuppeleinrichtung 48 und die Gegenkuppeleinrichtung 54 können auch anders als in den besprochenen Ausführungsbeispielen ausgebildet sein, beispielsweise als Bajonettverschluß. Entscheidend bei der Ausbildung dieser Einrichtung 48, 54 ist, daß im zusammengesetzten Zustand von Hauptteil 20 und Düsenteil 50 Sackbohrungen 56 und Wasserkanal 40 exakt fluchten. Gegebenenfalls kann dies durch außen am Außenmantel der Teile 22 und 50 angebrachte Markierungen überprüft werden. Im zusammengesetzten Zustand müssen die Markierungen miteinander fluchten.

## Patentansprüche

1. Ultraschallprüfkopf, geeignet für Schallankopplung über eine Wasservorlaufstrecke und bestehend aus einem Hauptteil (20), das ein Gehäuse (22) aufweist, a) in dem ein Ultraschallschwinger (26) wasserdicht untergebracht ist, wobei der Ultraschallschwinger (26) mit einer Schutzschicht (30) verbunden ist, die bündig mit einer Unterfläche (38) des Gehäuses (22) abschließt, b) das einen Wasserkanal (40) begrenzt, der eingangsseitig mit einem Schlauchanschluß (42) verbunden ist und der ausgangsseitig an der Unterfläche (38) neben dem Ultraschallschwinger (26) mündet und c) das an einer Seitenwand, unmittelbar angrenzend an die Unterfläche (38) eine formschlüssige Kuppeleinrichtung (48) aufweist für ein an die Unterfläche (38) anzusetzendes Düsenteil (50) für eine Wasserstrahlankopplung, welches eine entsprechende formschlüssige Gegenkoppeleinrichtung (54) hat, einen kegelstumpfförmig sich zu seinem freien Ende verjüngenden Düsenkanal (52) ausbildet, der eingangsseitig der Fläche des Ultraschallschwingers (26) angepaßt ist, eine den Ausgang des Wasserkanals (40) fortsetzende Sackbohrung (56) hat, einen Querkanal (58) zwischen der Sackbohrung (56) und dem Düsenkanal (52) aufweist, und aus einem Material hergestellt ist, dessen akustische Impedanz möglichst nahe der akustischen Impedanz von Wasser ist.

2. Ultraschallprüfkopf nach Anspruch 1, dadurch gekennzeichnet, daß das Gehäuse (22) im wesentlichen zylindrisch ist.

3. Ultraschallprüfkopf nach Anspruch 2, dadurch gekennzeichnet, daß der Wasserkanal (40) parallel zur Zylinderachse verläuft.

4. Ultraschallprüfkopf nach Anspruch 1, dadurch gekennzeichnet, daß der Ultraschallschwinger (46) eine Kreisscheibe ist.

5. Ultraschallprüfkopf nach Anspruch 2 und 4, dadurch gekennzeichnet, daß der Ultraschallschwinger (26) gleichachsig mit der Zylinderachse angeordnet ist.

6. Ultraschallprüfkopf nach Anspruch 1, dadurch gekennzeichnet, daß der Ultraschallschwinger (26) mit einer metallischen Schutzschicht (30), insbesondere einer Schutzschicht aus Stahl, verbunden ist.

7. Ultraschallprüfkopf nach Anspruch 1, dadurch gekennzeichnet, daß Hauptteil (20) und Düsenteil (50) im Bereich der Kuppeleinrichtung (48, 54) bündig ineinander übergehen.

8. Ultraschallprüfkopf nach Anspruch 1, dadurch gekennzeichnet, daß der Querschnitt des Querkanals (58) größer ist als der Querschnitt des Wasserkanals (40) und kleiner ist als der Querschnitt des Düsenkanals (52) in seinem Austrittsbereich.

9. Ultraschallprüfkopf nach Anspruch 1, dadurch gekennzeichnet, daß der Durchmesser der Sackbohrung (56) und der Durchmesser des Wasserkanals (40) gleich sind.

10. Ultraschallprüfkopf nach Anspruch 1, dadurch gekennzeichnet, daß der Durchmesser des Wasserkanals (40) kleiner, vorzugsweise mindestens um den Faktor 2 kleiner als der Durchmesser des Düsenkanals (52) an seinem freien Ende ist.

11. Ultraschallprüfkopf nach Anspruch 1, dadurch gekennzeichnet, daß der Querschnitt des Querkanals (58) größer ist, vorzugsweise mindestens um den Faktor 2 größer als der Querschnitt des Wasserkanals (40) ist.

12. Ultraschallprüfgerät nach Anspruch 1, dadurch gekennzeichnet, daß das Düsenteil aus Acrylglas, Epoxidharz oder Polyethylen und vorzugsweise einstückig hergestellt ist.

## Claims

1. Ultrasonic probe, suitable for acoustic coupling through a water lead section and comprising a main part (20) having an enclosure (22), a) in which an ultrasonic crystal (26) is housed so as to be watertight, the ultrasonic crystal (26) being connected to a protective layer (30), the limits of which lie flush with a lower surface (38) of the housing (22), b) which delimits a water channel (40), which is connected on the inlet side with a hose connection (42) and which opens out on the outlet side on the lower surface (38) adjacent to the ultrasonic crystal (26), and c) which has, on a side wall immediately adjoining the lower surface (38), a positive-locking coupling facility (48) for a nozzle part (50), which is to be fitted to the lower surface (38) for water-jet acoustic coupling, said nozzle part (50) having a matching positive-locking coupling facility (54), forming a nozzle channel (52) of conical frustum shape narrowing to its free end, which is adapted on the inlet side to the area of the ultrasonic crystal (26), having a blind hole (56) extending the outlet of the water channel (40), having a transverse channel (58) between the blind hole (56) and the nozzle channel (52), and being manufactured from a material the acoustic impedance of which is as close as possible to the acoustic impedance of water.

2. Ultrasonic probe according to Claim 1, characterized in that the housing (22) is essentially cylindrical.

3. Ultrasonic probe according to Claim 2, characterized in that the water channel (40) runs parallel to the cylinder axis.

4. Ultrasonic probe according to Claim 1, characterized in that the ultrasonic crystal (46) is disk-shaped.

5. Ultrasonic probe according to Claims 2 and 4, characterized in that the ultrasonic crystal (26) is arranged with its axis on the cylinder axis.

6. Ultrasonic probe according to Claim 1, characterized in that the ultrasonic crystal (26) is connected to a metallic protective layer (30), in particular a steel protective layer.

7. Ultrasonic probe according to Claim 1, characterized in that main part (20) and nozzle part (50) lie flush in the area of the coupling facility (48, 54).

8. Ultrasonic probe according to Claim 1, characterized in that the cross-section of the transverse channel (58) is greater than the cross-section of the water channel (40) and smaller than the cross-section of the nozzle channel (52) at its outlet.

9. Ultrasonic probe according to Claim 1, characterized in that the diameter of the blind hole (56) and the diameter of the water channel (40) are identical.

10. Ultrasonic probe according to Claim 1, characterized in that the diameter of the water channel (40) is smaller, preferably at least by a factor of 2, than the diameter of the nozzle channel (52) at its free end.

11. Ultrasonic probe according to Claim 1, characterized in that the cross-section of the transverse channel (58) is greater, preferably at least by a factor of 2, than the cross-section of the water channel (40).

12. Ultrasonic instrument according to Claim 1, characterized in that the nozzle part is manufactured from acrylic glass, epoxy resin, or polythene, and is preferably of single-piece construction.

## Revendications

1. Palpeur à ultrasons, approprié au couplage acoustique par une pré-course d'eau et se composant d'une pièce principale (20) qui présente un boîtier (22), a) dans lequel est logé de manière imperméable un transducteur (26), le transducteur (26) étant relié à une couche protectrice (30) qui se termine au même niveau qu'une surface inférieure (38) du boîtier (22), b) qui limite un canal d'eau (40) qui, à l'extrémité d'entrée, est relié à un raccord de tuyau (42) et qui, à l'extrémité de sortie, aboutit à la surface inférieure (38) à côté du transducteur (26) et c) qui présente sur une paroi latérale, immédiatement contigu à la surface inférieure (38) un dispositif de couplage (48) à engagement positif pour une pièce de buse (50) à ajouter à la surface inférieure (38) pour un couplage par jet d'eau, ladite pièce de buse présente un contre-dispositif de couplage correspondant (54) à engagement positif et forme un canai de buse (52) présentant une forme de tronc de cône et se rétrécissant vers son extrémité libre, ce canal est adapté à son extrémité d'entrée à la surface du transducteur (26), a un trou borgne (56) continuant la sortie du canal d'eau (40), présente un canal transversal (58) entre le trou borgne (56) et le canal de buse (52) et est fabriqué en un matériau dont l'impédance acoustique est aussi proche que possible de l'impédance acoustique de l'eau.

2. Palpeur à ultrasons selon la revendication 1, caractérisé par le fait que le boîtier (22) présente une forme pour l'essentiel cylindrique.

3. Palpeur à ultrasons selon la revendication 2, caractérisé par le fait que le canal d'eau (40) s'étend parallèlement à l'axe cylindrique.

4. Palpeur à ultrasons selon la revendication 1, caractérisé par le fait que le transducteur (26) est une disque circulaire.

5. Palpeur a ultrasons selon la revendication 2 et 4, caractérisé par le fait que le transducteur (26) est disposé de façon coaxiale avec l'axe cylindrique.

6. Palpeur à ultrasons selon la revendication 1, caractérisé par le fait que le transducteur (26) est relié à une couche protectrice métallique (30), en particulier à une couche protectrice en acier.

7. Palpeur à ultrasons selon la revendication 1, caractérisé par le fait que la pièce principale (20) ainsi que la pièce de buse (50) se confondent dans la zone du dispositif de couplage (48, 54) de manière à être afflleurées.

8. Palpeur à ultrasons selon la revendication 1, caractérisé par le fait que la section du canal transversal (58) est plus grande que la section du canal d'eau (40) et plus petite que la section du canal de buse (52) dans sa zone de sortie.

9. Palpeur a ultrasons selon la revendication 1, caractérise par le fait que le diamètre du trou borgne (56) et le diamètre du canal d'eau (40) sont égaux.

10. Palpeur à ultrasons selon la revendication 1, caractérisé par le fait que le diamètre du canal d'eau (40) est plus petit, de préférence plus petit du facteur 2 du moins que le diamètre du canal de buse (52) à son extrémité libre.

11. Palpeur à ultrasons selon la revendication 1, caractérisé par le fait que la section du canal transversal (58) est plus grande, de préférence plus grande du facteur 2 du moins que la section du canal d'eau (40).

12. Appareil pour essais de matériaux aux ultrasons selon la revendication 1, caractérisé par le fait que la pièce de buse est fabriquée en verre acrylique, en résine époxyde ou en polyéthylène et de préférence en une seule pièce.
